# EUROPEAN PATENT SPECIFICATION

(11) **EP 4 257 898 B1**
(45) Date of publication and mention of the grant of the patent: **03.06.2026**
(21) Application number: 21917199.8
(22) Date of filing: 23.11.2021
(51) Int. Cl.: F25D 23/12, C02F 1/00

(54) **WATER PATH INTEGRATED STRUCTURE AND REFRIGERATOR HAVING SAME**
INTEGRIERTE WASSERWEGSTRUKTUR UND KÜHLSCHRANK DAMIT
STRUCTURE INTÉGRÉE DE TRAJET D'EAU ET RÉFRIGÉRATEUR DOTÉ DE CELLE-CI

(30) Priority: 06.01.2021 CN 202110012125
(43) Date of publication of application: 11.10.2023
(73) Proprietor: Qingdao Haier Refrigerator Co., Ltd, Qingdao, Shandong 266101 (CN); Haier Smart Home Co., Ltd., Qingdao, Shandong 266101 (CN)
(72) Inventor: YANG, Jun, Qingdao, Shandong 266101 (CN); ZHANG, Yanqing, Qingdao, Shandong 266101 (CN); ZAHNG, Fangyou, Qingdao, Shandong 266101 (CN); ZUO, Lihua, Qingdao, Shandong 266101 (CN); MOU, Guoliang, Qingdao, Shandong 266101 (CN)
(74) Representative: Gille Hrabal Partnerschaftsgesellschaft mbB Patentanwälte
(86) International application number: PCT/CN2021/132419
(87) International publication number: WO 2022/148158

(56) References cited:
- CN-A- 101 261 066
- CN-A- 103 604 268
- CN-A- 109 708 407
- CN-U- 203 534 044
- US-A- 3 982 406
- US-A1- 2010 229 592
- US-A1- 2012 006 046
- US-A1- 2012 006 046
- US-A1- 2016 341 462
- US-A1- 2020 121 121

## Description

### TECHNICAL FIELD

The present invention relates to the field of refrigerator water circuits, and in particular, to a water-circuit integrated device and a refrigerator having the same.

### BACKGROUND

Currently, in order to facilitate use of users, a plurality of refrigerator products are provided therein with water-circuit integrated devices; specifically, a filter, a water valve and a water bottle are integrated together, such that external water can be filtered to be supplied to a dispenser and an ice maker; the water-circuit integrated device is also convenient to uniformly fix and repair.

However, in the water-circuit integrated device in a prior art, the water bottle is generally fixedly connected with a housing or a bracket, and cannot be detached, and when the water bottle is required to be replaced due to a change in a requirement or is required to be repaired due to damage to the water bottle, the water bottle cannot be replaced due to the fixed connection, and the repair is inconvenient. Relevant prior art is disclosed in US 2010/229592 A1.

### SUMMARY

An object of the present invention is to provide a water-circuit integrated device according to claim 1 and a refrigerator having the same.

To achieve the above-mentioned object of the invention, the present invention provides a water-circuit integrated device, comprising a filter, a water valve and a water bottle communicated in sequence,
wherein the water bottle comprises a proximal end and a distal end arranged oppositely in a length direction, the proximal end of the water bottle is detachably connected with the water valve by a water-bottle water inlet assembly, and the distal end of the water bottle is detachably connected with the filter by a distal-end snapping assembly; the water-bottle water inlet assembly comprises a rotation axis perpendicular to the length direction of the water bottle;
wherein by rotating the water bottle about a central axis of the water inlet sleeve, the water-bottle water inlet assembly is configured to be locked or released and the distal-end snapping assembly is configured to realize snapped connection or be released from the snapped connection;
the direction of the snapped connection of the distal-end snapping assembly is perpendicular to the axial direction of the rotation axis;
during snapped connection of the distal-end snapping assembly, the water-bottle water inlet assembly realizes locked connection in an axial direction of the rotation axis;
when the water-bottle water inlet assembly is released in the axial direction of the rotation axis, the distal-end snapping assembly is released from the snapped connection

As a further improvement to the present invention, wherein the proximal end of the water bottle is also detachably connected with the filter by a proximal-end snapping assembly; during snapped connection of the distal-end snapping assembly, the proximal-end snapping assembly realizes snapped connection; when the water-bottle water inlet assembly is released in the axial direction of the rotation axis, the proximal-end snapping assembly is released from the snapped connection.

As a further improvement to the present invention, wherein the distal-end snapping assembly comprises a distal-end snapping portion and a distal-end fitting portion which can be snapped to or separated from the distal-end snapping portion, the distal-end snapping portion is provided on one of the water bottle and the filter, and the distal-end fitting portion is provided on the other of the water bottle and the filter.

As a further improvement to the present invention, wherein the distal-end snapping portion is configured as a distal-end hanging buckle provided on the filter, the distal-end fitting portion is configured as a distal-end hanging hole provided on the water bottle, and during the snapped connection of the distal-end snapping assembly, the distal-end hanging buckle is inserted into the distal-end hanging hole.

According to the present invention, wherein the water bottle is further selectively communicated with the water valve through the water-bottle water inlet assembly; the water-bottle water inlet assembly comprises a water inlet sleeve and a water inlet insertion part rotatably inserted into the water inlet sleeve, and water inlet flow channels which can be mutually communicated are arranged in the water inlet insertion part and the water inlet sleeve; the water inlet sleeve is provided on one of the water bottle and the water valve, and the water inlet insertion part is provided on the other of the water bottle and the water valve; the water inlet insertion part is provided with a water inlet limiting protrusion, and the water inlet sleeve comprises a water inlet cylinder, a water inlet insertion port formed on the water inlet cylinder and a water inlet limiting hole provided in a circumferential direction of the water inlet cylinder; the water inlet sleeve is further provided with a water inlet guide groove matched with the water inlet limiting protrusion, and the water inlet guide groove extends from the water inlet insertion port along an axial direction of the water inlet sleeve and is communicated with an end portion of the water inlet limiting hole; and in the circumferential direction of the water inlet cylinder, a dimension of the water inlet limiting hole is greater than a dimension of the water inlet guide groove.

According to the present invention, wherein the rotation axis is configured as a central axis of the water inlet sleeve.

The invention on the other hand also discloses a refrigerator, said refrigerator comprising a freezer compartment, said freezer compartment being provided with water-circuit integrated device as described above.

Compared with a prior art, in the water-circuit integrated device according to the present invention, one end of the water bottle is detachably connected with the water valve by the water-bottle water inlet assembly, and the other end of the water bottle is detachably connected with the filter by the distal-end snapping assembly, such that during snapped connection of the distal-end snapping assembly, the water-bottle water inlet assembly also realizes locked connection, and the water bottle, the water valve and the filter can be connected together. When the water-bottle water inlet assembly is released, the distal-end snapping assembly is just released from the snapped connection, such that the water bottle can be smoothly detached from the water valve and the filter. Therefore, the water bottle can be conveniently connected with or detached from the water valve and the filter by fitting of the water-bottle water inlet assembly and the distal-end snapping assembly, such that the water bottle can be conveniently replaced or repaired subsequently.

### BRIEF DESCRIPTION OF THE DRAWINGS

FIG. 1 is a schematic structural diagram of a water-circuit integrated device according to an embodiment of the present invention;
FIG. 2 is a schematic structural diagram of a water-circuit integrated device according to an embodiment of the present invention;
FIG. 3 is a schematic structural diagram of a water-circuit integrated device according to an embodiment of the present invention;
FIG. 4 is a schematic enlarged diagram of part A of FIG. 3; and
FIG. 5 is a schematic sectional diagram of a water-bottle water inlet assembly in an embodiment of the present invention.

### DETAILED DESCRIPTION

Hereinafter, the present invention will be described in detail in conjunction with specific embodiments shown in the accompanying drawings. However, these embodiments have no limitations on the present invention, and the protection scope of the present invention is defined by the appended claims.

It should be understood that the terms expressive of spatial relative positions, such as "upper", "above", "lower", "below", or the like herein are used to describe the relationship of a unit or feature relative to another unit or feature in the drawings, for the purpose of illustration and description. Terms expressive of the spatial relative positions are intended to include different orientations of the device in use or operation other than the orientations shown in the drawings.

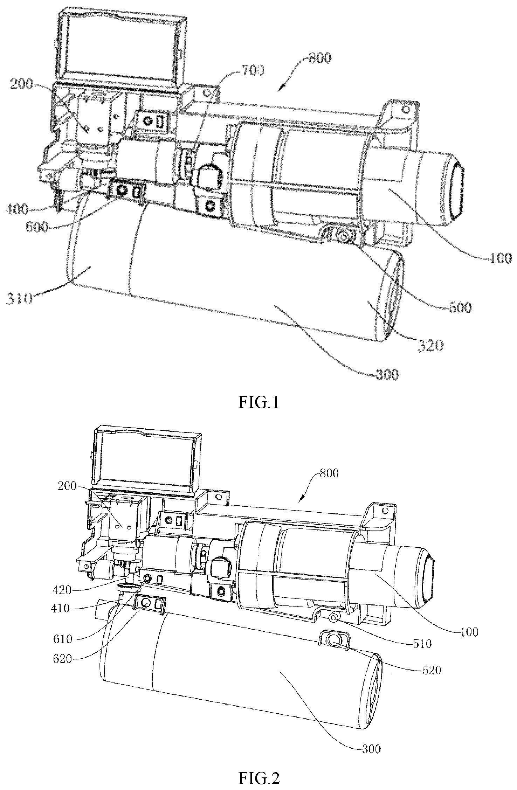

As shown in FIGS. 1 to 5, the present invention provides a water-circuit integrated device. The water-circuit integrated device includes a filter 100, a water valve 200 and a water bottle 300 communicated in sequence, the water bottle 300 includes a proximal end 310 and a distal end 320 arranged oppositely in a length direction, the proximal end 310 of the water bottle 300 is detachably connected with the water valve 200 by a water-bottle water inlet assembly 400, and the distal end 310 of the water bottle 300 is detachably connected with the filter 100 by a distal-end snapping assembly 500. The water-bottle water inlet assembly 400 includes a rotation axis perpendicular to the length direction of the water bottle 300. During snapped connection of the distal-end snapping assembly 500, the water-bottle water inlet assembly 400 realizes locked connection in an axial direction of the rotation axis. When the water-bottle water inlet assembly 400 is released in the axial direction of the rotation axis, the distal-end snapping assembly 500 is released from the snapped connection.

In the water-circuit integrated device according to the present invention, one end of the water bottle 300 is detachably connected with the water valve 200 by the water-bottle water inlet assembly 400, and the other end of the water bottle is detachably connected with the filter 100 by the distal-end snapping assembly 500, such that during snapped connection of the distal-end snapping assembly 500, the water-bottle water inlet assembly 400 also realizes locked connection, and the water bottle 300, the water valve 200 and the filter 100 can be connected together. When the water-bottle water inlet assembly 400 is released, the distal-end snapping assembly 500 is just released from the snapped connection, such that the water bottle 300 can be smoothly detached from the water valve 200 and the filter 100. Therefore, the water bottle 300 can be conveniently connected with or detached from the water valve 200 and the filter 100 by fitting of the water-bottle water inlet assembly 400 and the distal-end snapping assembly 500, such that the water bottle 300 can be conveniently replaced or repaired subsequently.

Further, when the distal-end snapping assembly 500 is released from the snapped connection, the water-bottle water inlet assembly 400 is released in the axial direction of the rotation axis. That is, when the distal-end snapping assembly 500 is released from the snapped connection, the water-bottle water inlet assembly 400 is also released in the axial direction of the rotation axis, and at this point, the water bottle 300 can be detached from the water valve 200 and the filter 100. Thus, state transitions of the water-bottle water inlet assembly 400 and the distal-end snapping assembly 500 are completely consistent, such that a stroke of a rotation operation can be shortened, and an operation of mounting or dismounting the water bottle 300 is simpler and more convenient.

In the present invention, during snapped connection of the distal-end snapping assembly 500, a direction of the locked connection of the water-bottle water inlet assembly 400 is different from a direction of the snapped connection of the distal-end snapping assembly 500. That is, the water-bottle water inlet assembly 400 and the distal-end snapping assembly 500 are connected with the water bottle in different directions, thereby further reinforcing the connection of the water bottle 300 with the water valve 200 and the filter 100; the connection in the two different directions does not interfere, such that the water bottle 300 is not easily released and dropped even when the assembly in one direction fails.

Still further, during snapped connection of the distal-end snapping assembly 500, the direction of the locked connection of the water-bottle water inlet assembly 400 is the axial direction of the rotation axis, and the direction of the snapped connection of the distal-end snapping assembly 500 is perpendicular to the axial direction of the rotation axis. That is, directions of the connection of the water-bottle water inlet assembly 400 and the distal-end snapping assembly 500 to the water bottle are perpendicular to each other. Mutual interference of the connection in the two directions can be reduced to the minimum, such that the connection of the water bottle is firmer.

In the embodiment of the present invention, the distal-end snapping assembly 500 includes a distal-end snapping portion and a distal-end fitting portion which can be snapped to or separated from the distal-end snapping portion, the distal-end snapping portion is provided on one of the water bottle 300 and the filter 100, and the distal-end fitting portion is provided on the other of the water bottle 300 and the filter 100. The snapping or separating operation can be easily realized by mutual fitting of the distal-end snapping portion and the distal-end fitting portion. In the present embodiment, the distal-end snapping portion is provided on the filter 100, and the distal-end fitting portion is provided on the water bottle 300.

Further, as shown in FIG. 2, the distal-end snapping portion is configured as a distal-end hanging buckle 510 provided on the filter 100, the distal-end fitting portion is configured as a distal-end hanging hole 520 provided on the water bottle 300, and during the snapped connection of the distal-end snapping assembly 500, the distal-end hanging buckle 510 is inserted into the distal-end hanging hole 520. The connection by the hanging buckle and the hanging hole has a simple structure and a low cost, and is easy to operate. Specifically, the snapped connection of the distal-end snapping assembly 500 may be realized directly by inserting the distal-end hanging buckle 510 into the distal-end hanging hole 520. When the connection of the distal-end snapping assembly 500 is desired to be reinforced, a thread may be provided in the distal-end hanging buckle 510, and when the distal-end hanging buckle 510 is inserted into the distal-end hanging hole 520, a screw is screwed into and in threaded connection with the distal-end hanging buckle 510, and an end surface of the screw abuts against an edge of the hanging hole 520. In other embodiments, the distal-end hanging buckle may also be in interference fit with the distal-end hanging hole. Therefore, in a transportation/assembly process of the water-circuit integrated device or a refrigerator, even when conditions of collision or shaking, or the like, are generated, the distal end of the water bottle cannot be easily disconnected. Also, the distal-end hanging buckle 510 may extend outwards from a housing of the filter 100, the distal-end hanging buckle 510 and the housing of the filter 100 may be integrally formed, the distal-end hanging hole 520 may extend outwards from the water bottle 300, and the distal-end hanging hole 520 and the water bottle 300 may be integrally formed. The arrangement of the integrally formed structure makes the connection between the water bottle 300 and the filter 100 more stable and firmer.

In other embodiments, the distal-end snapping portion and the distal-end fitting portion may be of other structures in snapped connection.

Preferably, the proximal end 310 of the water bottle 300 is also detachably connected with the filter 100 by a proximal-end snapping assembly 600. During snapped connection of the distal-end snapping assembly 500, the proximal-end snapping assembly 600 realizes snapped connection. When the water-bottle water inlet assembly 500 is released in the axial direction of the rotation axis, the proximal-end snapping assembly 600 is released from the snapped connection. The proximal-end snapping assembly 600 is provided at the proximal end 310 of the water bottle 300, thereby further strengthening the connection at the proximal end 310 of the water bottle 300. Furthermore, the proximal-end snapping assembly 600 can also be fitted with the water-bottle water inlet assembly 400 and the distal-end snapping assembly 500 to realize synchronous connection or detachment. Specifically, the proximal-end snapping assembly 600 also includes a proximal-end snapping portion 610 and a proximal-end fitting portion 620 which can be snapped to or separated from the proximal-end snapping portion 610, and in the embodiment of the present invention, the proximal-end snapping portion is configured as a proximal-end hanging buckle 610, and the proximal-end fitting portion is configured as a proximal-end hanging hole 620.

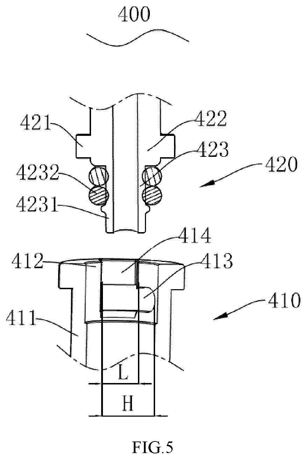

In the present invention, the water bottle 300 and the water valve 200 are also selectively communicated by the water-bottle water inlet assembly 400, and the water-bottle water inlet assembly 400 includes: a water inlet sleeve 410 and a water inlet insertion part 420 rotatably inserted into the water inlet sleeve 410. The water inlet insertion part 420 and the water inlet sleeve 410 are provided therein with water inlet flow channels which can be communicated with each other. The water inlet sleeve 410 is provided on one of the water bottle 300 and the water valve 200, and the water inlet insertion part 420 is provided on the other of the water bottle 300 and the water valve 200. The water inlet insertion part 420 is provided with a water inlet limiting protrusion 421, and the water inlet sleeve 410 includes a water inlet cylinder 411, a water inlet insertion port 412 formed on the water inlet cylinder 411 and a water inlet limiting hole 413 provided in a circumferential direction of the water inlet cylinder 411. The water inlet sleeve 410 is further provided with a water inlet guide groove 414 matched with the water inlet limiting protrusion 421, and the water inlet guide groove 414 extends axially from the water inlet insertion port 412 along the water inlet sleeve 410 and is communicated with an end portion of the water inlet limiting hole 413. As shown in FIG. 5, in the circumferential direction of the water inlet cylinder 411, a dimension H of the water inlet limiting hole 413 is greater than a dimension L of the water inlet guide groove 414. That is, the water-bottle water inlet assembly 400 not only serves to connect the water bottle 300 and the water valve 200, but also serves to allow water to pass therethrough, that is, allow water in the water valve 200 to flow into the water bottle 300, after the connection. In the embodiment of the present invention, external water firstly flows into the filter 100, and then flows into the water valve 200 from the filter 100, the water valve 200 has two water outlets, one of the two water outlets extends outwards to form the water inlet insertion part 420, and an inlet of the water bottle 300 extends outwards to form the water inlet sleeve 410, such that the water can flow through the water inlet insertion part 420 and the water inlet sleeve 410 after the water inlet insertion part 420 and the water inlet sleeve 410 are connected.

In addition, in the circumferential direction of the water inlet cylinder 411, the dimension H of the water inlet limiting hole 413 is set to be greater than the dimension L of the water inlet guide groove 414, such that when the water inlet insertion part 420 is inserted into the water inlet sleeve 410, the water inlet limiting protrusion 421 on the water inlet insertion part 420 can enter the water inlet guide groove 414 from the water inlet insertion port 412 on the water inlet sleeve 410, and then, the water bottle 300 is rotated along the rotation axis in a first direction, and the water inlet limiting protrusion 421 can enter the water inlet limiting hole 413; since the dimension H of the water inlet limiting hole 413 is larger and the water inlet limiting hole 413 is not communicated with the water inlet insertion port 412, at this point, the water inlet limiting protrusion 421 and the water inlet limiting hole 413 are in snap fit, such that even when a force is applied in a direction opposite to an insertion direction, the water inlet insertion part 420 cannot reversely exit from the water inlet sleeve 410, thereby locking the water-bottle water inlet assembly 400. Then, the water bottle 300 is rotated along the rotation axis in a direction opposite to the first direction, such that the water inlet limiting protrusion 421 is aligned with the water inlet guide groove 414, thereby releasing the water-bottle water inlet assembly 400 in the axial direction of the rotation axis. At this point, the water inlet limiting protrusion 421 can move towards the water inlet insertion port 412 along the water inlet guide groove 414 by applying a force in the direction opposite to the insertion direction, and finally, the water inlet insertion part 420 reversely exits from the water inlet sleeve 410.

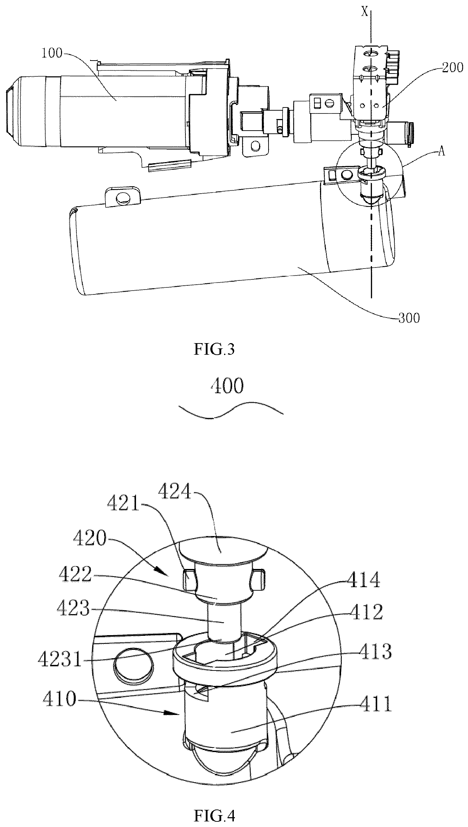

Specifically, as shown in FIG. 3, the rotation axis is configured as a central axis X of the water inlet sleeve 410. That is, by rotating the water bottle 300 about the central axis X of the water inlet sleeve 410, the water-bottle water inlet assembly 400 can be locked or released, and the distal-end snapping assembly 500 can realize snapped connection or be released from the snapped connection. Thus, the connection and detachment of the water bottle 300 are simple, and an operation of a user is convenient.

Further, the water inlet sleeve 410 extends outwards from a water inlet of the water bottle 300, and the water inlet sleeve 410 and the water bottle 300 are integrally formed. The water inlet insertion part 420 extends outwards from a water outlet of the water valve 200, and the water inlet insertion part 420 and the water valve 200 are integrally formed. That is, no water pipe is provided between the water bottle 300 and the water valve 200, and the water bottle 300 and the water valve 200 are directly connected through the water-bottle water inlet assembly 400 extending from the respective components of the water bottle 300 and the water valve 200, such that the connection is more stable, and a problem that the water pipe is bent to be damaged and difficult to repair, and a risk of water leakage are avoided.

Preferably, the water inlet insertion part 420 includes a first insertion portion 422 and a second insertion portion 423 provided at a front end of the first insertion portion 422, and an outer diameter of the second insertion portion 423 is less than an outer diameter of the first insertion portion 422. When the water inlet insertion part 420 is inserted into the water inlet sleeve 410, the second insertion portion 423 having a less inner diameter is inserted into the water inlet sleeve 410 first, such that a guiding function can be provided for an insertion action, and the connection of the water-bottle water inlet assembly 400 is easier.

In the embodiment of the present invention, the second insertion portion 423 is sleeved with a sealing part The sealing part 4231 is configured to fill a gap between an outer wall of the second insertion portion 423 and an inner wall of the water inlet sleeve 410, thereby preventing water leakage. Specifically, an inner diameter at a position of the water inlet sleeve 410 corresponding to the sealing part 4231 on the second insertion portion 423 is reduced, such that the sealing part 4231 is pressed between the inner wall of the water inlet sleeve 410 and the second insertion portion 423 to further enhance a sealing effect.

Further, the water inlet insertion part 420 further includes a stopper 424 connected with the first insertion portion 421, and an end surface of the stopper 424 abuts against an end surface of the water inlet sleeve 410. The stopper 424 serves as a terminal point of insertion of the water inlet insertion part 420 into the water inlet sleeve 410; that is, when the water inlet insertion part is inserted into the water inlet sleeve 410, and the end surface of the stopper 424 is seen to abut against the end surface of the water inlet sleeve 410, the insertion action can be determined to be in place.

As shown in FIG. 4, the water inlet insertion part 420 is provided with two water inlet limiting protrusions 421, the two water inlet limiting protrusions 421 are symmetrically arranged relative to an axis of the water inlet insertion part 420, and two water inlet guide grooves 413 are arranged at positions on the water inlet sleeve corresponding to the two water inlet limiting protrusions 421. The two symmetrical water inlet limiting protrusions 421 and the two corresponding water inlet guide grooves 413 are arranged, such that the water inlet insertion part 420 and the water inlet sleeve 410 can be locked more firmly and stably.

Preferably, the filter 100 and the water valve 200 are selectively communicated through a filter water outlet assembly 700. The filter water outlet assembly 700 includes: a water outlet sleeve and a water outlet insertion part rotatably inserted into the water outlet sleeve. The filter water outlet assembly 700, the water outlet sleeve and the water outlet insertion part have identical structures to and different positions from the water-bottle water inlet assembly 400, the water inlet sleeve 410 and the water inlet insertion part 420. Therefore, the detailed structure of the filter water outlet assembly 700 is not repeated.

Further, the filter 100, the water valve 200 and the water bottle 300 are adjacently arranged two by two, and the water-bottle water inlet assembly 400 is perpendicular to the filter water outlet assembly 700. That is, the central axis X of the water outlet sleeve is perpendicular to the central axis of the water inlet sleeve 410.

As shown in FIG. 1, the water-circuit integrated device further includes a housing 800, and the housing 800 encloses the filter 100 and the water valve 200. Specifically, the housing 800 also functions to connect the water-circuit integrated device to the refrigerator. In addition, the distal-end hanging buckle 510 is also provided on the housing 800, such that the connection of the water bottle 300 is more stable.

An embodiment of the present invention discloses a refrigerator including a refrigerating chamber, wherein the refrigerating chamber is provided therein with the water-circuit integrated device as mentioned above.

In the water-circuit integrated device according to the present invention, one end of the water bottle is detachably connected with the water valve by the water-bottle water inlet assembly, and the other end of the water bottle is detachably connected with the filter by the distal-end snapping assembly, such that during snapped connection of the distal-end snapping assembly, the water-bottle water inlet assembly also realizes locked connection, and the water bottle, the water valve and the filter can be connected together. When the water-bottle water inlet assembly is released, the distal-end snapping assembly is just released from the snapped connection, such that the water bottle can be smoothly detached from the water valve and the filter. Therefore, the water bottle can be conveniently connected with or detached from the water valve and the filter by fitting of the water-bottle water inlet assembly and the distal-end snapping assembly, such that the water bottle can be conveniently replaced or repaired subsequently. The directions of the connection of the water-bottle water inlet assembly and the distal-end snapping assembly to the water bottle are perpendicular to each other. Therefore, the connection of the water bottle with the water valve and the filter is further reinforced; the connection in the two different directions does not interfere, such that the water bottle is not easily released and dropped even when the assembly in one direction fails. The water-bottle water inlet assembly not only serves to connect the water bottle and the water valve, but also serves to allow water to pass therethrough, that is, allow water in the water valve to flow into the water bottle, after the connection. The rotation axis is constructed as the central axis of the water inlet sleeve, such that the connection and detachment of the water bottle are simple, and the operation of the user is convenient. The water inlet sleeve extends outwards from the water inlet of the water bottle, and the water inlet sleeve and the water bottle are integrally formed. The water inlet insertion part extends outwards from the water outlet of the water valve, and the water inlet insertion part and the water valve are integrally formed. No water pipe is provided between the water bottle and the water valve, and the water bottle and the water valve are directly connected through the water-bottle water inlet assembly extending from the respective components of the water bottle and the water valve, such that the connection is more stable, and the problem that the water pipe is bent to be damaged and difficult to repair, and the risk of water leakage are avoided. The two symmetrical water inlet limiting protrusions and the two corresponding water inlet guide grooves are arranged, such that the water inlet insertion part and the water inlet sleeve can be locked more firmly and stably. The filter and the water valve are selectively communicated through the filter water outlet assembly. The central axis X of the water outlet sleeve is perpendicular to the central axis of the water inlet sleeve.

It should be understood that although the present specification is described based on embodiments, not every embodiment contains only one independent technical solution. Such a narration way of the present specification is only for the sake of clarity. Those skilled in the art should take the present specification as an entirety.

A series of the detailed descriptions set forth above is merely specific description of feasible embodiments of the present invention, and is not intended to limit the protection scope of the present invention. The protection scope of the present invention is defined by the appended claims.

## Claims

1. A water-circuit integrated device, comprising a filter (100), a water valve (200) and a water bottle (300) communicated in sequence,
wherein the water bottle (300) comprises a proximal end (310) and a distal end (320) arranged oppositely in a length direction, the proximal end of the water bottle (300) is detachably connected with the water valve (200) by a water-bottle water inlet assembly (400), and the distal end (320) of the water bottle (300) is detachably connected with the filter (100) by a distal-end snapping assembly (500); the water-bottle water inlet assembly (400) comprises a rotation axis perpendicular to the length direction of the water bottle (300);
wherein the water bottle (300) is further selectively communicated with the water valve (200) through the water-bottle water inlet assembly (400); the water-bottle water inlet assembly (400) comprises a water inlet sleeve (410) and a water inlet insertion part (420) rotatably inserted into the water inlet sleeve (410), and water inlet flow channels which can be mutually communicated are arranged in the water inlet insertion part (420) and the water inlet sleeve (410); the water inlet sleeve (410) is provided on one of the water bottle (300) and the water valve (200), and the water inlet insertion part (420) is provided on the other of the water bottle (300) and the water valve (200); the water inlet insertion part (420) is provided with a water inlet limiting protrusion (421), and the water inlet sleeve (410) comprises a water inlet cylinder (411), a water inlet insertion port (412) formed on the water inlet cylinder (411) and a water inlet limiting hole (413) provided in a circumferential direction of the water inlet cylinder (411); the water inlet sleeve (410) is further provided with a water inlet guide groove (414) matched with the water inlet limiting protrusion (421), and the water inlet guide groove(414) extends from the water inlet insertion port (412) along an axial direction of the water inlet sleeve (410) and is communicated with an end portion of the water inlet limiting hole (413); and in the circumferential direction of the water inlet cylinder (411), a dimension of the water inlet limiting hole (413) is greater than a dimension of the water inlet guide groove (414) ; wherein the rotation axis is configured as the central axis (X) of the water inlet sleeve (410) ; the direction of the snapped connection of the distal-end snapping assembly (500) is perpendicular to the axial direction of the rotation axis,
wherein by rotating the water bottle (300) about the central axis (X) of the water inlet sleeve (410), the water-bottle water inlet assembly (400) is configured to be locked or released and the distal-end snapping assembly (500) is configured to realize snapped connection or be released from the snapped connection;
during snapped connection of the distal-end snapping assembly (500), the water-bottle water inlet assembly (400) realizes locked connection in an axial direction of the rotation axis;
when the water-bottle water inlet assembly (400) is released in the axial direction of the rotation axis, the distal-end snapping assembly (500) is released from the snapped connection.

2. The water-circuit integrated device according to claim 1, wherein the proximal end of the water bottle (300) is also detachably connected with the filter by a proximal-end snapping assembly (600); during snapped connection of the distal-end snapping assembly (500), the proximal-end snapping assembly (600) realizes snapped connection; when the water-bottle water inlet assembly (400) is released in the axial direction of the rotation axis, the proximal-end snapping assembly (600) is released from the snapped connection.

3. The water-circuit integrated device according to claim 1, wherein the distal-end snapping assembly (500) comprises a distal-end snapping portion and a distal-end fitting portion which can be snapped to or separated from the distal-end snapping portion, the distal-end snapping portion is provided on one of the water bottle (300) and the filter (100), and the distal-end fitting portion is provided on the other of the water bottle (300) and the filter (100).

4. The water-circuit integrated device according to claim 3, wherein the distal-end snapping portion is configured as a distal-end hanging buckle (510) provided on the filter(100), the distal-end fitting portion is configured as a distal-end hanging hole (520) provided on the water bottle (300), and during the snapped connection of the distal-end snapping assembly (500), the distal-end hanging buckle (510) is inserted into the distal-end hanging hole (520).

5. A refrigerator, comprising a refrigerating chamber, wherein the refrigerating chamber is provided therein with the water-circuit integrated device according to any one of claims 1 to 4.

## Patentansprüche

1. Eine integrierte Wasserkreislauf-Vorrichtung, umfassend einen Filter (100), ein Wasserventil (200) und eine Wasserflasche (300), die der Reihe nach in Verbindung stehen,
wobei die Wasserflasche (300) ein proximales Ende (310) und ein distales Ende (320) umfasst, die in einer Längsrichtung gegenüberliegend angeordnet sind, wobei das proximale Ende der Wasserflasche (300) mit dem Wasserventil (200) durch eine Wasserflaschen-Wassereinlassanordnung (400) lösbar verbunden ist, und das distale Ende (320) der Wasserflasche (300) mit dem Filter (100) durch eine distale Schnappanordnung (500) lösbar verbunden ist; wobei die Wasserflaschen-Wassereinlassanordnung (400) eine Drehachse umfasst, die senkrecht zur Längsrichtung der Wasserflasche (300) verläuft;
wobei die Wasserflasche (300) ferner selektiv mit dem Wasserventil (200) durch die Wasserflaschen-Wassereinlassanordnung (400) in Verbindung steht; wobei die Wasserflaschen-Wassereinlassanordnung (400) eine Wassereinlasshülse (410) und ein Wassereinlass-Einsteckteil (420) umfasst, das drehbar in die Wassereinlasshülse (410) eingesteckt ist, und wobei Wassereinlass-Strömungskanäle, die miteinander in Verbindung stehen können, in dem Wassereinlass-Einsteckteil (420) und der Wassereinlasshülse (410) angeordnet sind; wobei die Wassereinlasshülse (410) an einem von der Wasserflasche (300) und dem Wasserventil (200) vorgesehen ist, und das Wassereinlass-Einsteckteil (420) an dem anderen von der Wasserflasche (300) und dem Wasserventil (200) vorgesehen ist; wobei das Wassereinlass-Einsteckteil (420) mit einem Wassereinlass-Begrenzungsvorsprung (421) versehen ist, und die Wassereinlasshülse (410) einen Wassereinlasszylinder (411), eine an dem Wassereinlasszylinder (411) ausgebildete Wassereinlass-Einstecköffnung (412) und ein in einer Umfangsrichtung des Wassereinlasszylinders (411) vorgesehenes Wassereinlass-Begrenzungsloch (413) umfasst; wobei die Wassereinlasshülse (410) ferner mit einer Wassereinlass-Führungsnut (414) versehen ist, die auf den Wassereinlass-Begrenzungsvorsprung (421) abgestimmt ist, und die Wassereinlass-Führungsnut (414) sich von der Wassereinlass-Einstecköffnung (412) entlang einer axialen Richtung der Wassereinlasshülse (410) erstreckt und mit einem Endabschnitt des Wassereinlass-Begrenzungslochs (413) in Verbindung steht; und wobei in der Umfangsrichtung des Wassereinlasszylinders (411) eine Abmessung des Wassereinlass-Begrenzungslochs (413) größer ist als eine Abmessung der Wassereinlass-Führungsnut (414); wobei die Drehachse als die Mittelachse (X) der Wassereinlasshülse (410) ausgebildet ist; wobei die Richtung der Schnappverbindung der distalen Schnappanordnung (500) senkrecht zur axialen Richtung der Drehachse verläuft,
wobei durch Drehen der Wasserflasche (300) um die Mittelachse (X) der Wassereinlasshülse (410) die Wasserflaschen-Wassereinlassanordnung (400) dazu ausgebildet ist, verriegelt oder gelöst zu werden, und die distale Schnappanordnung (500) dazu ausgebildet ist, eine Schnappverbindung herzustellen oder aus der Schnappverbindung gelöst zu werden;
wobei während der Schnappverbindung der distalen Schnappanordnung (500) die Wasserflaschen-Wassereinlassanordnung (400) eine verriegelte Verbindung in einer axialen Richtung der Drehachse realisiert;
wobei, wenn die Wasserflaschen-Wassereinlassanordnung (400) in der axialen Richtung der Drehachse gelöst wird, die distale Schnappanordnung (500) aus der Schnappverbindung gelöst wird.

2. Die integrierte Wasserkreislauf-Vorrichtung nach Anspruch 1, wobei das proximale Ende der Wasserflasche (300) auch mit dem Filter durch eine proximale Schnappanordnung (600) lösbar verbunden ist; wobei während der Schnappverbindung der distalen Schnappanordnung (500) die proximale Schnappanordnung (600) eine Schnappverbindung realisiert; wobei, wenn die Wasserflaschen-Wassereinlassanordnung (400) in der axialen Richtung der Drehachse gelöst wird, die proximale Schnappanordnung (600) aus der Schnappverbindung gelöst wird.

3. Die integrierte Wasserkreislauf-Vorrichtung nach Anspruch 1, wobei die distale Schnappanordnung (500) einen distalen Schnappabschnitt und einen distalen Passabschnitt umfasst, der mit dem distalen Schnappabschnitt eingeschnappt oder von diesem getrennt werden kann, wobei der distale Schnappabschnitt an einem von der Wasserflasche (300) und dem Filter (100) vorgesehen ist, und der distale Passabschnitt an dem anderen von der Wasserflasche (300) und dem Filter (100) vorgesehen ist.

4. Die integrierte Wasserkreislauf-Vorrichtung nach Anspruch 3, wobei der distale Schnappabschnitt als eine distale Einhängeschnalle (510) ausgebildet ist, die an dem Filter (100) vorgesehen ist, wobei der distale Passabschnitt als ein distales Einhängeloch (520) ausgebildet ist, das an der Wasserflasche (300) vorgesehen ist, und wobei während der Schnappverbindung der distalen Schnappanordnung (500) die distale Einhängeschnalle (510) in das distale Einhängeloch (520) eingeführt wird.

5. Ein Kühlschrank, umfassend eine Kühlkammer, wobei die Kühlkammer darin mit der integrierten Wasserkreislauf-Vorrichtung nach einem der Ansprüche 1 bis 4 versehen ist.

## Revendications

1. Un dispositif intégré à un circuit d'eau, comprenant un filtre (100), une vanne d'eau (200) et une bouteille d'eau (300) communiqués en séquence,
dans lequel la bouteille d'eau (300) comprend une extrémité proximale (310) et une extrémité distale (320) disposées en sens opposé dans une direction de longueur, l'extrémité proximale de la bouteille d'eau (300) est connectée de manière amovible à la vanne d'eau (200) par un assemblage d'entrée d'eau de bouteille d'eau (400), et l'extrémité distale (320) de la bouteille d'eau (300) est connectée de manière amovible au filtre (100) par un assemblage à encliquetage d'extrémité distale (500) ; l'assemblage d'entrée d'eau de bouteille d'eau (400) comprend un axe de rotation perpendiculaire à la direction de longueur de la bouteille d'eau (300) ;
dans lequel la bouteille d'eau (300) est en outre sélectivement communiquée avec la vanne d'eau (200) à travers l'assemblage d'entrée d'eau de bouteille d'eau (400) ; l'assemblage entrée d'eau de bouteille d'eau (400) comprend un manchon d'entrée d'eau (410) et une partie d'insertion d'entrée d'eau (420) insérée de manière tournable dans le manchon d'entrée d'eau (410), et des canaux de flux d'entrée d'eau, qui peuvent être communiqués mutuellement, sont disposés dans la partie d'insertion d'entrée d'eau (420) et le manchon d'entrée d'eau (410) ; le manchon d'entrée d'eau (410) est fourni sur l'une de la bouteille d'eau (300) et de la vanne d'eau (200), et la partie d'insertion d'entrée d'eau (420) est fournie sur l'autre de la bouteille d'eau (300) et de la vanne d'eau (200) ; la partie d'insertion d'entrée d'eau (420) est fournie d'une protubérance limitante d'entrée d'eau (421), et le manchon d'entrée d'eau (410) comprend un cylindre d'entrée d'eau (411), un orifice d'insertion d'entrée d'eau (412) formé sur le cylindre d'entrée d'eau (411) et un trou limitant d'entrée d'eau (413) fourni dans une direction circonférentielle du cylindre d'entrée d'eau (411) ; le manchon d'entrée d'eau (410) est en outre fourni d'une rainure de guidage d'entrée d'eau (414) correspondant à la protubérance limitante d'entrée d'eau (421), et la rainure de guidage d'entrée d'eau (414) s'étend depuis l'orifice d'insertion d'entrée d'eau (412) le long d'une direction axiale du manchon d'entrée d'eau (410) et est communiquée avec une partie d'extrémité du trou limitant d'entrée d'eau (413) ; et dans la direction circonférentielle du cylindre d'entrée d'eau (411), une dimension du trou limitant d'entrée d'eau (413) est supérieure à une dimension de la rainure de guidage d'entrée d'eau (414) ; dans lequel l'axe de rotation est configuré comme l'axe central (X) du manchon d'entrée d'eau (410) ; la direction de la connexion encliquetée de l'assemblage à encliquetage d'extrémité distale (500) est perpendiculaire à la direction axiale de l'axe de rotation,
dans lequel, en faisant tourner la bouteille d'eau (300) autour de l'axe central (X) du manchon d'entrée d'eau (410), l'assemblage d'entrée d'eau de bouteille d'eau (400) est configuré pour être verrouillé ou libéré, et l'assemblage à encliquetage d'extrémité distale (500) est configuré pour réaliser la connexion encliquetée ou être libéré de la connexion encliquetée ;
pendant une connexion encliquetée de l'assemblage à encliquetage d'extrémité distale (500), l'assemblage d'entrée d'eau de bouteille d'eau (400) réalise une connexion verrouillée dans une direction axiale de l'axe de rotation ;
lorsque l'assemblage d'entrée d'eau de bouteille d'eau (400) est libéré dans la direction axiale de l'axe de rotation, l'assemblage à encliquetage d'extrémité distale (500) est libéré de la connexion encliquetée.

2. Le dispositif intégré à un circuit d'eau selon la revendication 1, dans lequel l'extrémité proximale de la bouteille d'eau (300) est aussi connectée de manière amovible au filtre par un assemblage à encliquetage d'extrémité proximale (600) ; pendant une connexion encliquetée de l'assemblage à encliquetage d'extrémité distale (500), l'assemblage à encliquetage d'extrémité proximale (600) réalise une connexion encliquetée ; lorsque l'assemblage d'entrée d'eau de bouteille d'eau (400) est libéré dans la direction axiale de l'axe de rotation, l'assemblage à encliquetage d'extrémité proximale (600) est libéré de la connexion encliquetée.

3. Le dispositif intégré à un circuit d'eau selon la revendication 1, dans lequel l'assemblage à encliquetage d'extrémité distale (500) comprend une partie à encliquetage d'extrémité distale et une partie d'ajustement d'extrémité distale qui peut être encliquetée à ou séparée de la partie à encliquetage d'extrémité distale, la partie à encliquetage d'extrémité distale est fournie sur l'une de la bouteille d'eau (300) et du filtre (100), et la partie d'ajustement d'extrémité distale est fournie sur l'autre de la bouteille d'eau (300) et du filtre (100).

4. Le dispositif intégré à un circuit d'eau selon la revendication 3, dans lequel la partie à encliquetage d'extrémité distale est configurée comme une boucle suspendue d'extrémité distale (510) fournie sur le filtre (100), la partie d'ajustement d'extrémité distale est configurée comme un trou suspendu d'extrémité distale (520) fourni sur la bouteille d'eau (300), et lors de la connexion encliquetée de l'assemblage à encliquetage d'extrémité distale (500), la boucle suspendue d'extrémité distale (510) est insérée dans le trou suspendu d'extrémité distale (520).

5. Un réfrigérateur, comprenant une chambre de réfrigération, dans laquelle la chambre de réfrigération est fournie du dispositif intégré à un circuit d'eau selon l'une quelconque des revendications 1 à 4 là-dedans.
